# EUROPEAN PATENT SPECIFICATION

(11) **EP 0 866 829 B1**
(45) Date of publication and mention of the grant of the patent: **26.03.2003**
(21) Application number: 96944807.5
(22) Date of filing: 12.12.1996
(51) Int. Cl.: C08J 3/03, C08J 3/07

(54) **DISPERSIONS OF POLYHYDROXYALKANOATES IN WATER**
WÄSSRIGE POLYHYDROXYALKANOATDISPERSIONEN
DISPERSIONS DE POLYHYDROXYALCANOATES DANS L'EAU

(30) Priority: 12.12.1995 GB 9525390
(43) Date of publication of application: 30.09.1998
(73) Proprietor: METABOLIX, INC., Cambridge, MA 02142 (US)
(72) Inventor: GEORGE, Neil, Hillam, Leeds LS255HS (GB)
(74) Representative: Bassett, Richard Simon
(86) International application number: US9619886
(87) International publication number: WO97021762

(56) References cited:
- WO-A-95/15260
- WO-A-96/24682
- DE-A- 4 040 158

## Description

This invention relates to dispersions of polyhydroxyalkanoates [PHA] in water and processes for making such dispersions.

In our co-pending applications such as GB 9502522.7 filed 9 February 1995, we describe latices of PHA containing surfactant, generally of the conventional type consisting of a single hydrophobic group having a single hydrophilic group at or near one of its ends. Such latices are of great practical usefulness, but could desirably be improved in stability and preparative convenience. Additionally, DE-4040158 A discloses dispersions of [PHA] such as polyhydroxybutyrate [PHB] in water and WO - 95/15260 A describes the preparation of aqueous [PHB] suspension.

The invention provides a composition comprising polyhydroxyalkanoate particles in water and at least one water-soluble copolymeric dispersant in an amount suitable to disperse the particles, wherein the dispersant contains a plurality of repeating units, wherein the units include:
[a] at least one polyhydroxyalkanoate-compatible unit and
[b] at least one hydrophilic unit, wherein the polyhydroxyalkanoate-compatible unit is an aliphatic hydrocarbon, aromatic hydrocarbon, or polyoxyalkylene, and wherein the hydrophilic unit is anionic, cationic or non-ionic.

The dispersion of PHA particles in water provided by the invention is characterised by steric stabilisation.

Stabilisation is provided by the presence on the surface of such particles of at least one water-soluble copolymeric dispersant. Copolymeric dispersants are characterised by containing a plurality - at least 2 and typically at least 10 and up to e.g. several hundred - of repeating units, including units of the two types:-
[a] PHA - compatible; and
[b] hydrophilic

Type A units are aliphatic hydrocarbon [for example as in addition polymers] or aromatic hydrocarbon or [in chain lengths sufficient to give water-insolubility in a corresponding polymer consisting of such units] polyoxyalkylene, especially poly-1,2-propylene oxide or polyester of the head-to-tail or head-to-tail/tail-to-tail types such as for example, 12-hydroxystearic acid polycondensate or alkyl resin. Preferably type A units carry substituents such as esterified carboxy groups or esterified or etherified hydroxy groups or both, since these afford greater compatibility with the PHA. Particular examples of such substituents are disclosed below.

Type B units are anionic, for example carboxylate, sulphate, sulphonate, phosphate or phosphonate; or cationic, for example ammonium, especially quaternary ammonium; or non-ionic, for example polyalkylene oxide especially polyethyleneoxide, or polyglycerol or sorbitan or glycoside or amine oxide. The dispersant may contain hydrophilic groups of more than one chemical composition of ionic category. Very suitably it is polyethyleneoxy, especially 10 to 100 ethylene oxide units long, as is typical of conventional water-soluble surfactants.

The dispersant may contain a minor proportion, for example, under 20 mol percent, of units falling into neither type A nor type B.

The balance of type A and type B units should be such as to provide the water solubility, which typically is at least 1% w/w in water at 20°C. Preferably the type B units are in a minority by moles, for example less than one-third of the total units in the copolymer chain; correspondingly the water-soluble portion of the type B units, if polyethyleneoxy, should be sufficiently long. The HLB number (HLB signifies hydrophile-lipophile balance rating) of the dispersant is suitably in the range 10-15. Generally the dispersant is preferably from the class of non-ionic emulsifiers, especially when the PHA particles are non-crystalline to the extent described below.

The PHA is especially capable of a relatively high level of crystallinity, for example over 30%, especially 50-90%. Although so capable, it is preferably non-crystalline to the extent described below. It typically has units of formula 1:

-O-CₘHₙ-CO-

where m is in the range 1-13 and n is 2m or (except when m is one) 2m-2. Typically CₘHₙ contains 2-5 carbon atoms in the polymer chain and the remainder (if any) in a side chain. In very suitable polyesters m is 3 or 4, n is 2m and especially there are units with m = 3 and m = 4 copolymerized together with respectively a C₁ and C₂ side chain on the carbon next to oxygen. Particular polyesters contain a preponderance of m = 3 units, especially with at least 70 mol % of such units, the balance being units in which m = 4. The molecular weight of the polymer is for example over 50000, especially over 100000, up to 2 x 10⁶.

PHA of formula (1) containing only m = 3 units may be referred to as PHB; and PHA containing m = 3 and m = 4 units is the co-polymer polyhydroxy-butyrate-co-valerate (PHBV). PHBV preferably contains 4-25% of m = 4 units. Since the intended PHA product can be a blend of two or more PHAs differing in the value of m, a corresponding mixture of suspensions can be used in the process of the invention. A particular example contains:
(a) PHA consisting essentially of Formula 1 units in which 2-5 mol % of units have m = 4, the rest m = 3; and
(b) PHA consisting essentially of Formula 1 units in which 5-30 mol % of units have m = 4, the rest m = 3.
The proportions of the PHAs in such blends preferably give an average m = 4 content in the range 4-25 mol %.

The PHA may be the product of chemical synthesis but is more particularly the product of a microbiological process. In such a process the microorganism may lay down PHA during normal growth or may be caused to do so by cultivation in the absence of one or more nutrients necessary for cell multiplication. The micro-organism may be wild or mutated or may have had the necessary genetic material introduced into it. Alternalively, the necessary genetic material may be harboured by a eukariote, to effect the microbiological process. PHA produced microbioligically is [R]-stereospecific.

Examples of suitable microbiological processes are the following:-
- for Formula 1 materials with m = 3; or m = partly 3, partly 4; EP-A-69497 [Alcaligenes eutrophus];
- for Formula 1 materials with m = 3; US 4101533 [A. Eutrophus], EP-A-144017 [A latus]
- for Formula 1 material with m = 7-13: EP-A-0392687 [various Pseudomonas]

The type A unit compatibility with the PHA when in its amorphous state appears to correspond to a solubility parameter closer to that of the PHA than that of conventional paraffin-chain surfactants. The balance may also afford substantial insolubility in water at over 80°C. It is believed that in such dispersants the hydrophilic groups are so in virtue of interpenetration of polymeric water molecules with polyethylene oxide chains, but that this structure is "melted out" at higher temperature.

The particles can carry a part layer of material such as surfactant other than the dispersant. The liquid phase can contain surfactant additional to that absorbed on the particles. It may contain hydrotropic compounds such as water soluble monomeric or oligomeric compounds, for example, glycols and polyols.

The invention further provides processes of making the dispersion, by either of:
[a] shearing liquid-form PHA in a solution of the dispersant; or
[b] dissolving PHA in a liquid of low water solubility to produce a solution, emulsifying the resulting solution in an aqueous solution of the dispersant, and removing the liquid. This is especially convenient when the liquid is volatile, since then it can be removed by evaporation or diffusion.

The process of the invention can be achieved by making PHA-containing microbiological biomass, solubilising biomass, solubilising non-PHA material and applying the dispersant to the resulting PHA particles.

In the above processes a dispersion of PHA in a solution of a conventional surfactant can be treated with the dispersant to replace that surfactant by the dispersant.

In the dispersion the PHA particles are on average preferably under 30, especially under 20, especially under 1, % w/w crystalline. It appears that each individual particle is either maximally or 0% crystalline: thus the percentage crystallinity is the weight proportion of maximally crystalline particles. It is believed that the effectiveness of the dispersant may be due to surface mixing or deeper mixing of its type A domains with non-crystalline PHA. Contacting PHA particles with the dispersant is at a temperature preferably over 5°C, for example 10-50°C.

In the above processes these levels of crystallinity apply to the particles at the time of contacting with the dispersant. Thus for process (c) in particular the particles should be in the never-dried virgin state.

In a particular dispersant there may be present units carrying at least one oxygen-linked hydrocarbon group. The oxygen-links may be ester or ether. Examples of esters are:
(a) those of the acids acrylic (as hereinafter defined), maleic, fumaric and itaconic, with C₁₋₁₈ alcohols and phenols;
(b) those of allyl alcohol or the notional vinyl alcohol with C₁₋₁₈ carboxylic acids.
Examples of ether groups are those of allyl alcohol or the notional vinyl alcohol with C₁₋₁₈ alcohols and phenols. Such alcohols and carboxylic acids can be straight-chain, branched or cyclic but, if substituted, do not include groups conferring water-solubility on the polymer in the proportion used.

The above-mentioned esterifying alcohols and carboxylic acids and etherifying alcohols preferably each contain at least 2, preferably up to 9, carbon atoms.

Other type A units can be the residues of for example one or more of ethylene, propylene, styrene, vinyl halides, vinylidene halides, vinyl methyl ether, vinyl acetals, vinyl carbonate, acrylic (as hereinafter defined) nitrile or methyl ester and conjugated olefins.

The term 'acrylic' is herein defined by the general formula: 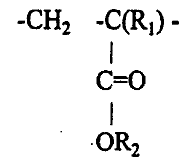 where R₁ is hydrogen C₁₋₁₂ alkyl (especially methyl), cycloalkyl, aryl, halogen or cyano and R₂ is a C₁₋₁₈ hydrocarbon group. The analogous definition of R₁ applies to corresponding nitrile units if present.

The invention further provides a process for making a polyhydroxyalkanoate latex comprising:
- producing a biomass containing particles of polyhydroxyalkanoate and non-polyhydroxyalkanoate cell material [NPCM];
- solubilising the NPCM;
- removing the solubilised NPCM; and
- suspending the polhydroxyalkanoate particles in an aqueous solution of a dispersant to produce a dispersion, wherein the dispersant contains a plurality of repeating units, wherein the units include at least one polyhydroxyalkanoate-compatible unit and at least one hydrophilic unit, wherein the polyhydroxyalkanoate-compatible unit is an aliphatic hydrocarbon, aromatic hydrocarbon, or polyoxyalkylene, an wherein the hydrophilic unit is anionic, cationic or non-ionic.

Step [b] can be carried out by methods involving, for example, one or more of the following:
i.] heat shock
ii.] hydrolase solubilisation of glycopeptides
iii.] protease solubilisation of proteins
iv.]solubilisation of nucleic acids
v.] surfactant action on proteins
vi.]oxidation by hypochlorite
vii.]oxidation by peroxide

Methods [vii] and [v], possibly following [I] and [iii] and/or [ii] and [iv] are preferred.

If the dispersant is sufficiently soluble in water at the required operating temperature it can be used as the solubilising surfactant in [v]; otherwise a conventional surfactant can be used in the solubilisation and thereafter replaced or supplemented by the dispersant.

The invention can be adapted to enable a dry PHA suitable for solvent processing or melt processing to be produced, by the steps of:-
a) producing a biomass of PHA-containing cells in water;
b) solubilising and removing at 50% w/w of NPCM by one or more of the methods specified for step [b] above;
c) stabilising an aqueous dispersion of the resulting impure PHA by means of the dispersant herein defined;
d) concentrating the dispersion to e.g. at least 200 g/l of PHA;
e) applying further steps of NPCM solubilisation and removal to the so-concentrated dispersion.

Steps [d] and [e] may be carried out by separating a cake or pellet of PHA and redispersing it.

The dispersion containing the dispersant, whether concentrated or not, can be used directly for purposes such as coating water-sensitive materials such as paper and board as described in our co-pending application above mentioned. Alternatively it can be converted to solid PHA, possibly via steps or particle agglomeration at over 80°C.

### EXAMPLE 1

A raw PHA latex was produced by the following steps 1 to 4 set out below and samples of this latex were then used in the separate experiments [a], [b] and [c] whose results are given in Tables 1, 2 and 3.
1. Growth of Alcaligenes eutrophus on glucose substrate in an aqueous medium containing sources of nitrogen and phosphate and usual other nutrients and trace elements until phosphate exhaustion;
2. accumulation of 76.6;23.4 mol percent PHBV by feeding further glucose and also sodium propionate and a trace of phosphate until the rate of accumulation became slow;
3. heat shock at 150°C;
4. treating with proteolytic enzyme to effect solubilisation of NPCM

The raw latex was treated further as follows:
[a] Samples of raw latex containing 134.3 g/kg of solids [90% PHA] and 38.6 g of solubles were formulated as follows:-
A No further addition;
B 0,5% w/w of dispersant CG6 which is an acrylic graft copolymer formulation in water/propylene glycol containing 32% w/w of active agent of HLB number approximately 11-12, available from Imperial Chemical Industries PLC under the name HYPERMER [RTM] CG6. HYPERMER CG6 is a polyacrylic polymer, having a backbone of acrylic acid, and polyethylene glycol as the hydrophilic unit.
C,D,E 0.99%, 3.0%, and 4.97% w/w of dispersant B respectively.

[These percentages are calculated on the PHA].
Each sample was centrifuged at 4300 rpm for 30 min. The supernatant was discarded and the pellet resuspended in dionized water. The particle size distribution of the resulting suspension was then measured. The samples that did not flocculate were then centrifuged and resuspended again to determine if the dispersant was washed off the solids. The particle size distribution of the samples that did not flocculate are shown in Table 1.

**TABLE 1**

| Dispersant CG6 (% w/w) | 1st Resuspension w/w | | | 2nd Resuspension w/w | | |
|---|---|---|---|---|---|---|
| | 10% (µm) | 50% (µm) | 90% (µm) | 10% (µm) | 50% (µm) | 90% (µm) |
| 0.00 | 2.34 | 58.46 | 502.77 | | | |
| 0.50 | 0.64 | 2.92 | 48.84 | | | |
| 0.99 | 0.58 | 1.52 | 20.13 | | | |
| 3.00 | 0.53 | 1.11 | 3.16 | 0.60 | 3.00 | 50.96 |
| 4.97 | 0.53 | 1.09 | 2.77 | 0.58 | 1.81 | 33.44 |

Even 0.5% addition of dispersant had a significant effect on the redispersibility of the centrifuge pellet. The lowest dose that prevented flocculation completely was 3%. When centrifuged and resuspended a second time, both the 3% and 5% pellets flocculated. This is explained as follows: when resuspended the first time the solubles become diluted 10 to 20 fold, reducing the dispersant concentration to between 0.15 and 0.5%. The particle sizes obtained after the second centrifugation are similar to those from the 0.5% addition to the original material. This suggests that the dispersant would need "topping up" after each centrifuge wash, or that resuspension should be carried out in dispersant solution at suitably 0.5% w/w.
(b) Samples of raw latex containing 368 g/kg of solids, viscosity initially 8 to 15 mpas were formulated with 3% w/w of various surfactants and dispersants and tested in a Bohlin Rheometer system at 25°C, shear rate 1460 sec⁻¹ for periods up to 1 hour. Their viscosities were observed to increase grossly at times as shown in Table 2.

**TABLE 2**

| Surfactant | Type | Viscosity Increase Time , ks |
|---|---|---|
| Aerosol OT | Dioctyl sulphosuccinate | 0.25 |
| SDS | Sodium dodecylsulphate | 0.25 |
| Nansa AS40 | Sodium dodecylbenzenesulphonate | 0.3, 0.6 |
| Sarcozyl | Sodium lauryl sarcosinate | 0.3 |
| Dowfax 3A1 | Sodium dodecyldiphenyl oxide disulphonate | 0.6 |
| No Addition | | 1.2 |
| Triton 405 | Octylphenoxy PEO, HLB 17.9 | 2.7 (slow inc. from 1.5) |
| Synperonic PE/F108 | (80 % w/w polypropylene (oxide NW 3250 (20% w/w polyethylene (oxide (total MW 50000 approx | over 3.5 |
| CG6 | Acrylic graft copolymer. | over 3.5 |

It is evident that most of the conventional surfactants provoke a viscosity increase at time much shorter than in their absence; but that the dispersants stabilize the viscosity.
(c) A sample of the raw latex was digested with hydrogen peroxide and surfactant Synperonic A20 (TTM) (C₁₃ alkyl 20 mols ethylene oxide, 19 g/l), at 80°C for 10h and allowed to cool. A test sample was evaluated for crystallinity by centrifuging with 40% w/v Nycodenz (RTM) at 15000 rpm for 15 min. No crystalline fraction was observed. Three further samples were centrifuged without Nycodenz and the attempt made to resuspend the resulting solid pellets in water. Results are shown in Table 3.

**TABLE 3**

| CG6 % w/v | Centrifuge speed rpm | Centrifuge min | pellet | Supernatant | Resuspendability | Crystalline/amorphous |
|---|---|---|---|---|---|---|
| 0 | 9000 | 10 | very firm | very clear | very difficult to resuspend any pelleted material | crystalline |
| 0.5 | 9000 | 10 | firm | clear | difficult | crystalline |
| 0.5 | 5000 | 5 | soft | very cloudy ca (50% solids pelleted out) | very easy | amorphous |

It is evident that it is possible to resuspend amorphous latex particles if dispersant CG6 is present, even at 0.5% w/v, provided centrifugation conditions are not too severe. Optimization is likely to lead to conditions intermediate between the second and third runs in Table 4, possibly (see Table 1) at a higher CG6 concentration.

### EXAMPLE 2

A PHA latex was prepared by the following steps:
1 Powdered crystalline PHVB (76.6:23.4 by moles) was dissolved in chloroform to give a 5% w/w solution;
2 The solution was emulsified in an aqueous solution (1% w/v) of Sarkosyl (RTM) (sodium N-lauroyl sarcosinate).
3 The chloroform was removed by stirring in a current of nitrogen leaving a latex of solid amorphous particles of average diameter 0.56 µm. The latex was concentrated to 6% w/v solids and freed of excess Sarkosyl by dia-filtration. It was then conentrated to 40% w/v solids by evaporation. Samples 2A (without CG6) and 2B (with CG6 5% w/v on the PHVB) were tested for shear ability in a Bohlin Rheometer system at 21°C, 3000 rpm:
   The times to flocculation were:
      2A: 500 sec
      2B: over 3600 sec.

It is evident that the dispersant is as effective for emulsification-route latex as it is for virgin latex.

## Claims

1. A composition comprising polyhydroxyalkanoate particles in water and at least one water-soluble copolymeric dispersant in an amount suitable to disperse the particles, wherein the dispersant contains a plurality of repeating units, wherein the units include at least one polyhydroxyalkanoate-compatible unit and at least one hydrophilic unit, wherein the polyhydroxyalkanoate-compatible unit is an aliphatic hydrocarbon, aromatic hydrocarbon, or polyoxyalkylene, and wherein the hydrophilic unit is anionic, cationic or non-ionic.

2. The composition of Claim 1 wherein the polyhydroxyalkanoate consists of repeating units of:
-O-CₘHₙ-CO-
wherein m is between 1 and 13 and n is 2m or 2m-2.

3. The composition of Claim 1 wherein the polyhydroxyalkanoate is polyhydroxybutyrate-co-valerate.

4. The composition of Claim 1 wherein the polyhydroxyalkanoate is microbiologically produced.

5. The composition of Claim 1 wherein the polyhydroxyalkanoate-compatible unit comprises an oxygen-linked hydrocarbon group.

6. The composition of Claim 1 wherein the hydrophilic group is non-ionic.

7. The composition of Claim 1 wherein the dispersant is a polypropylene oxide.

8. The composition of Claim 1 wherein the dispersant is an acrylic graft copolymer.

9. A process for making the composition of Claim 1 comprising shearing liquid-form polyhydroxyalkanoate in a solution of the dispersant.

10. A process for making the composition of Claim 1 comprising:
dissolving polyhydroxyalkanoate in a liquid of low water solubility to produce a solution;
emulsifying the solution in an aqueous solution of the dispersant; and
removing the liquid of said dissolving.

11. The process of Claim 10 wherein the liquid of said dissolving is volatile.

12. A process for making a polyhydroxyalkanoate latex comprising:
producing a biomass containing particles of polyhydroxyalkanoate and non-polyhydroxyalkanoate cell material (NPCM);
solubilising the NPCM;
removing the solubilised NPCM; and
suspending the polyhydroxyalkanoate particles in an aqueous solution of a dispersant to produce a dispersion, wherein the dispersant contains a plurality of repeating units, wherein the units include at least one polyhydroxyalkanoate-compatible unit and at least one hydrophilic unit, wherein the polyhydroxyalkanoate-compatible unit is an aliphatic hydrocarbon, aromatic hydrocarbon, or polyoxyalkylene, and wherein the hydrophilic unit is anionic, cationic or non-ionic.

13. The process of Claim 12, further comprising:
concentrating the dispersion to at least 200 g/L of polyhydroxyalkanoate; and
repeating said solubilising and said removing.

14. The process of Claim 12 wherein the polyhydroxyalkanoate-compatible unit comprises an oxygen-linked hydrocarbon group.

15. The process of Claim 12 wherein the hydrophilic group is non-ionic.

16. The process of Claim 12 wherein the dispersant is a polypropylene oxide.

17. The process of Claim 12 wherein the dispersant is an acrylic graft copolymer.

18. The process of Claim 12 wherein said solubilising is carried out by:
heat shock,
hydrolase solubilisation of glycopeptides,
protease solubilisation of proteins,
solubilisation of nucleic acids,
surfactant action on proteins,
oxidation by hypochlorite, or
oxidation by peroxide.

## Patentansprüche

1. Zusammensetzung aus Polyhydroxyalkanoat-Teilchen in Wasser und wenigstens einem wasserlöslichen copolymeren Dispersionsmittel in einer Menge, die geeignet ist, die Teilchen zu dispergieren, wobei das Dispersionsmittel eine Vielzahl sich wiederholender Einheiten enthält, wobei die Einheiten wenigstens eine Polyhydroxyalkenoat-kompatlble Einheit und wenigstens eine hydrophile Einheit umfassen, wobei die Polyhydroxyalkanoat-kompatible Einheit ein aliphatischer Kohlenwasserstoff, ein aromatischer Kohlenwasserstoff oder ein Polyoxyalkylen ist und wobei die hydrophile Einheit anionisch, kationisch oder nicht-ionisch ist.

2. Zusammensetzung nach Anspruch 1, wobei das Polyhydroxyalkanoat besteht aus sich wiederholenden Einheiten
-O-CₘHₙ-CO-,
wobei m zwischen 1 und 13 liegt und n ist 2m oder 2m - 2.

3. Zusammensetzung nach Anspruch 1, wobei das Polyhydroxyalkanoat Polyhydroxybutyrat-co-valerat ist.

4. Zusammensetzung nach Anspruch 1, wobei das Polyhydroxyalkanoat mikrobiologisch erzeugt wird.

5. Zusammensetzung nach Anspruch 1, wobei die Polyhydroxyalkanoat-kompatible Einheit eine Sauerstoff-verknüpfte Kohlenwasserstoffgruppe umfasst.

6. Zusammensetzung nach Anspruch 1, wobei die hydrophile Gruppe nicht-ionisch ist.

7. Zusammensetzung nach Anspruch 1, wobei das Dispersionsmittel Polypropylenoxid ist.

8. Zusammensetzung nach Anspruch 1, wobei das Dispersionsmittel ein acrylisches Propfcopolymer ist.

9. Verfahren zur Herstellung der Zusammensetzung nach Anspruch 1, das das Scheren von Polyhydroxyalkanoat in flüssiger Form in einer Lösung des Dispersionsmittels umfasst.

10. Verfahren zur Herstellung der Zusammensetzung nach Anspruch 1, das umfasst Auflösen des Polyhydroxyalkanoats in einer Flüssigkeit von geringer Wasserlöslichkeit zur Erzeugung einer Lösung;
Emulgieren der Lösung in einer wässrigen Lösung des Dispersionsmittels; und
Entfernen der Flüssigkeit der genannten Auflösung.

11. Zusammensetzung nach Anspruch 1, wobei die Flüssigkeit der genannten Aufösung flüchtig ist.

12. Verfahren zur Herstellung eines Latex aus Polyhydroxyalkanoat, das umfasst
Herstellen einer Biomasse, die Polyhydroxyalkanoat-Teilchen sowie nicht aus Polyhydroxyalkanoat bestehendes Zellmaterial (NPCM) enthält;
Solubilisieren des NPCM;
Entfernen des solubilisierten NPCM; und
Suspendieren der Polyhydroxyalkanoat-Teilchen in einer wässrigen Lösung eines Dispersionsmittels, um eine Dispersion zu erzeugen, wobei das Dispersionsmittel eine Vielzahl sich wiederholender Einheiten enthält, wobei die Einheiten wenigstens eine Polyhydroxyalkanoat-kompatible Einheit und wenigstens eine hydrophile Einheit umfassen, wobei die Polyhydroxyalkanoat-kompatible Einheit ein aliphatischer Kohlenwasserstoff, ein aromatischer Kohlenwasserstoff oder ein Polyoxyalkylen ist und wobei die hydrophile Einheit anionisch, kationisch oder nicht-ionisch ist.

13. Verfahren nach Anspruch 12, das außerdem umfasst
Konzentrieren der Dispersion auf wenigstens 200 g Polyhydroxyalkanoat/L; und
Wiederholen der genannten Solubilisierung und des genannten Entfernens.

14. Verfahren nach Anspruch 12, wobei die Polyhydroxyaikanoat-kompatible Einheit eine Sauerstoff-verknüpfte Kohlenwasserstoffgruppe umfasst.

15. Verfahren nach Anspruch 12, wobei die hydrophile Gruppe nicht-ionisch ist.

16. Verfahren nach Anspruch 12, wobei das Dispersionsmittel Polypropylenoxid ist.

17. Verfahren nach Anspruch 12, wobei das Dispersionsmittel ein acrylisches Propfcopolymer ist.

18. Verfahren nach Anspruch 12, wobei die genannte Solubilisierung durchgeführt wird durch Hitzeschock;
Solubilisierung von Glykopeptiden mittels Hydrolase;
Solubilisierung von Proteinen mittels Protease;
Solubilisierung von Nukleinsäuren;
Einwirkung von Tensiden auf Proteine;
Oxidation durch Hypochlorit, oder
Oxidation durch Peroxid.

## Revendications

1. Composition comprenant des particules de polyhydroxyalcanoate dans l'eau et au moins un dispersant copolymère soluble dans l'eau, en une quantité appropriée pour disperser les particules, dans laquelle le dispersant contient une série d'unités récurrentes, dans laquelle les unités comprennent au moins une unité compatible avec le polyhydroxyalcanoate et au moins une unité hydrophile, dans laquelle l'unité compatible avec le polyhydroxyalcanoate est un hydrocarbure aliphatique, un hydrocarbure aromatique ou un polyoxyalcoylène, et dans laquelle l'unité hydrophile est anionique, cationique ou non ionique.

2. Composition selon la revendication 1, dans laquelle le polyhydroxyalcanoate consiste en les unités récurrentes :
-O-CₘHₙ-CO-
où m se situe entre 1 et 13 et n est 2m ou 2m-2.

3. Composition selon la revendication 1, dans laquelle le polyhydroxyalcanoate est le polyhydroxybutyrate-co-valérate.

4. Composition selon la revendication 1, dans laquelle le polyhydroxyalcanoate est produit de manière microbiologique.

5. Composition selon la revendication 1, dans laquelle l'unité compatible avec le polyhydroxyalcanoate comprend un radical hydrocarboné lié à un oxygène.

6. Composition selon la revendication 1, dans laquelle le radical hydrophile est non ionique.

7. Composition selon la revendication 1, dans laquelle le dispersant est un poly(oxyde de propylène).

8. Composition selon la revendication 1, dans laquelle le dispersant est un copolymère greffé d'acrylique.

9. Procédé de préparation de la composition selon la revendication 1, comprenant le cisaillement du polyhydroxyalcanoate sous forme liquide, dans une solution du dispersant.

10. Procédé de préparation de la composition selon la revendication 1, comprenant les étapes consistant à :
dissoudre le polyhydroxyalcanoate dans un liquide de faible solubilité dans l'eau pour produire une solution ;
émulsionner la solution dans une solution aqueuse du dispersant, et
éliminer le liquide de ladite dissolution.

11. Procédé selon la revendication 10, dans lequel le liquide de ladite dissolution est volatile.

12. Procédé de préparation d'un latex de polyhydroxyalcanoate, comprenant les étapes consistant à :
produire une biomasse contenant des particules de polyhydroxyalcanoate et d'un matériau cellulaire non polyhydroxyalcanoate (NPCM) ;
solubiliser le NPCM ;
éliminer le NPCM solubilisé, et
mettre en suspension les particules de polyhydroxyalcanoate dans une solution aqueuse d'un dispersant pour produire une dispersion, dans lequel le dispersant contient une série d'unités récurrentes, dans lequel les unités comprennent au moins une unité compatible avec le polyhydroxyalcanoate et au moins une unité hydrophile, dans lequel l'unité compatible avec le polyhydroxyalcanoate est un hydrocarbure aliphatique, un hydrocarbure aromatique ou un polyoxyalcoylène, et dans lequel l'unité hydrophile est anionique, cationique ou non ionique.

13. Procédé selon la revendication 12, comprenant en outre :
la concentration de la dispersion jusqu'à au moins 200 g/litre du polyhydroxyalcanoate, et
répéter ladite solubilisation et ladite élimination.

14. Procédé selon la revendication 12, dans lequel l'unité compatible avec le polyhydroxyalcanoate comprend un radical hydrocarboné lié à un oxygène.

15. Procédé selon la revendication 12, dans lequel le radical hydrophile est non ionique.

16. Procédé selon la revendication 12, dans lequel le dispersant est un poly(oxyde de propylène).

17. Procédé selon la revendication 12, dans lequel le dispersant est un copolymère greffé d'acrylique.

18. Procédé selon la revendication 12, dans lequel ladite solubilisation est réalisée par :
un choc thermique,
une solubilisation par hydrolase de glycopeptides,
une solubilisation par protéase de protéines,
une solubilisation d'acides nucléiques,
une action tensioactive sur des protéines,
une oxydation par hypochlorite, ou
une oxydation par un peroxyde.
